# EUROPÄISCHE PATENTSCHRIFT

(11) **EP 0 396 906 B1**
(45) Veröffentlichungstag und Bekanntmachung des Hinweises auf die Patenterteilung: **15.12.1993**
(21) Anmeldenummer: 90106474.1
(22) Anmeldetag: 05.04.1990
(51) Int. Cl.: A61C 7/02, A61C 7/32

(54) **Packung von Ligaturendrähten und Gerät zur Ausgabe derselben**
Package for ligature wires and device for dispensing them
Emgallage pour filaments de ligature et dipositif pour leur dispense

(30) Priorität: 10.05.1989 CH 1760/89
(43) Veröffentlichungstag der Anmeldung: 14.11.1990
(73) Patentinhaber: Reinhard, Peter, 8953 Dietikon (CH); Hübers, Ulrich, Dr., D-77652 Offenburg (DE)
(72) Erfinder: Reinhard, Peter, 8953 Dietikon (CH); Hübers, Ulrich, Dr., D-77652 Offenburg (DE)
(74) Vertreter: EGLI-EUROPEAN PATENT ATTORNEYS

(56) Entgegenhaltungen:
- DE-A- 2 458 448
- DE-U- 8 131 098
- US-A- 3 596 357

## Beschreibung

Die Erfindung betrifft eine Packung von Ligaturendrähten für ein Gerät zur Ausgabe von Ligaturendrähten für die Kieferorthopädie, bei welchem Gerät die Ligaturendrähte in ein Ausgabegehäuse eingelegt sind.

Das Aufgabengebiet der Orthopädie umfasst im wesentlichen die Korrektur von Zahnstellungs- und Kieferanomalien. Von den hierzu verwendeten Apparaten ist ein sog. Band-Bogenapparatur bekannt mit welchem Zahn-Fehlstellungen eines Gebisses korrigiert werden. An der Labial- bzw. der Lingualfläche der Zähne werden Halterplatten, sog. Brackets, befestigt, in welchen ein Schloss zum Einlegen eines Drahtbogens ausgespart ist. Damit die Kraft des Bogens auf die Zähne übertragen werden kann, ist es erforderlich, diesen Bogen an den Brackets zu fixieren. Diese Fixierung kann unter anderem auch durch feine Drähte erreicht werden, welches Verfahren als Ligatur bezeichnet wird. Das Anlegen und Fixieren eines solchen Drahtbogens ist jedoch eine verhältnismässig aufwendige Arbeit, insbesondere dann, wenn eine Korrektur der Zähne sowohl des Oberkiefers als auch des Unterkiefers vorgenommen werden muss.

Für die Ligaturen bedient man sich feiner Drähte mit einer Stärke von einigen Zehntel Millimeter, beispielsweise 0,2-0,3 mm, die um die Brackets gelegt und deren Enden zum Einspannen des Bogens in das Schloss eines Brackets verdrillt werden. Der Ligaturendraht legt sich hierbei über den Bogen und erstreckt sich unterhalb zweier an den Brackets angeordneten Flügel, wo er nicht abgestreift werden kann. Für das Verdrillen der Ligaturendrähte werden Hilfsgeräte benützt, mit denen das Verdrillen erleichtert werden soll.

Ein hierfür bekanntes, als Twister bezeichnetes Gerät desselben Anmelders (Schweizer Patentgesuch Nr. 1894/88 vom 19.05.88) ermöglicht eine wesentlich schnellere Verdrillung der Ligaturendrähte. Das Gerät ist stabförmig ausgebildet und weist einen Spannkopf zum Festklemmen eines Ligaturendrahtes auf. Der Spannkopf ist mit einem im Innern des stabförmigen Gerätes angeordneten Drahstab verbunden. Am Aussenumfang des Drehstabes sind Gewindegänge eingearbeitet, die mit Gewindegängen des Stabes zusammenwirken. Durch eine Axialbewegung des Stabes wird dem Drehstab und damit dem Spannkopf eine Drehbewegung erteilt, durch welche die Enden des Ligaturendrahtes zum Fixieren eines in Brackets geführten Bogens verdrillt, wodurch der Bogen die Uebertragung seiner Kraft auf die Zähne ermöglicht. Wenn auch durch den Twister das Verdrillen der Ligaturendrähte beschleunigt wird, ist nicht zu übersehen, dass das Einlegen des Ligaturendrahtes in den Twister recht mühsam und zeitaufwendig ist. Die schlaufenförmig ausgebildeten Ligaturendrähte werden, wahllos durcheinander liegend, in Schachteln angeliefert. Wenn nun ein einzelner Ligaturendraht aus einem solchen Stoss ineinander liegender, teilweise miteinander verhängten Ligaturdrähten herausgelöst werden soll, kann dieser Vorgang recht zeitaufwendig sein.

In DE-U-8131098 sind ein ellagasin, in dem die Ligaturen mit ihren Enden über den Rand hinausragen und mit den Lange erfaßt wenden konnen, offenkant.

DE-A-2 458 448 offenkant einen Zahnregulier-O-Ring-Stenden und Interingvorrichtung.

Hier setzt nun die Erfindung ein, der die Aufgabe zugrunde liegt, die einzelnen Ligaturendrähte nicht nur in geordneter Anordnung anzuliefern, sondern diese auch einzeln so anzubieten, dass der Ligaturendraht problemlos von einem Twister oder einem andern entsprechenden Werkzeug, z.B. chirurgischen Nadelhaltern, gefasst und unmittelbar darauf zum Fixieren eines Bogens eingesetzt werden kann.

Diese Aufgabe wird gemäss der Erfindung dadurch gelöst, dass die Ligaturendrähte als Drahtschlaufe mit zwei Schenkeln vorgeformt und in dem Ausgabegehäuse einzeln auf einander liegend einlegbar sind, wobei die Schenkel der Ligaturendrähte nebeneinander auf demselben Niveau liegend angeordnet sind. Dadurch wird erreicht, dass die einzelnen Ligaturendrähte satt aufeinander liegen und immer denselben Abstand von einander aufweisen.

Zweckmässig sind hierbei die Schenke der Ligaturendrähte in ihren Endpartien miteinander fest verbunden, z.B. durch Schweissen, Löten oder Leimen. Durch die feste Verbindung der beiden Schenkel wird der Transport des einzelnen Ligaturendrahtes in seine Uebergabestellung erleichtert.

Ein Ausführungsbeispiel der Erfindung ist in der Zeichnung dargestellt und nachfolgend beschrieben. Es zeigen
- Fig. 1: eine schematisch dargestellte Seitenansicht, teilweise im Schnitt, eines Gerätes für die Ausgabe eines einzelnen Ligaturendrahtes, der in eine Lage gebracht wird, in welcher er von einem Twister oder ähnlichem Werkzeug gefasst werden kann,
- Fig. 2: einen Schnitt des Gerätes nach Figur 1, längs der Linie II-II,
- Fig. 3: einen Ausschnitt mit der Bodenpartie des in Fig I dargestellten Gerätes, bei welchem sich ein einzelner Ligaturendraht in der Ausgabestellung befindet,
- Fig. 4: eine Ansicht des Gerätes nach Fig. 1 aus Richtung IV, teilweise im Schnitt,
- Fig. 5: drei Beispiele von vorgeformten Ligaturendrähten, deren Schenke in ihren Endbereichen mit einander verbunden sind,
- Fig. 6: eine schematisch dargestellte Seitenansicht, teilweise im Schnitt, eine Ligaturenhülse für die Aufnahme einer Packung von Ligaturendrähten, welche einzeln auf einander liegen und durch gefederte Halter am Herausfallen gehindert werden,
- Fig. 7: einen Schnitt der Ligaturenhülse nach Fig. 6, längs der Linie VII und
- Fig. 8: eine Ansicht der Ligaturenhülse nach Fig. 6 aus Richtung VIII.

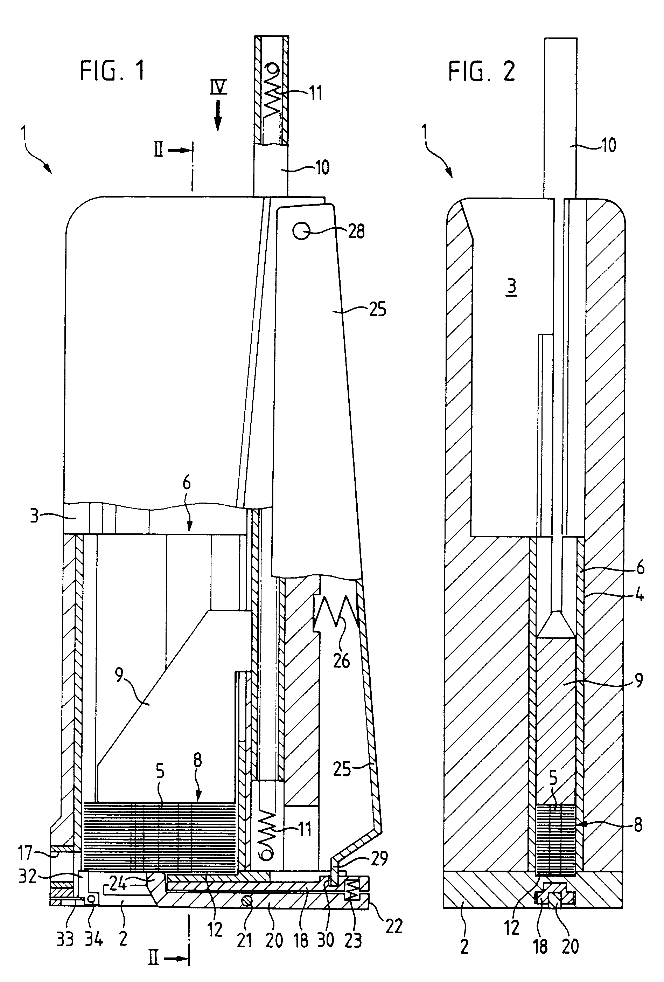

Die Erfindung geht von der Ueberlegung aus, dass der zeitliche Aufwand für das Fixieren eines Drahtbogens in der Kieferorthopädie vor allem dadurch vermindert werden kann, wenn es gelingt, die Ligaturendrähte so bereitzustellen, dass jeweils ein einzelner Ligaturendraht ausgegeben und von einem Twister oder anderem ähnlichem Werkzeug gefasst und unmittelbar anschliessend zur Fixierung eines Drahtbogens eingesetzt werden kann. Fig. 1-4 zeigen ein solches Gerät, das eine Packung einzelner, aufeinander liegender Ligaturendrähte aufnimmt und jeweils einen einzelnen Ligaturendraht zum Fassen mittels eines Twisters ausgibt.

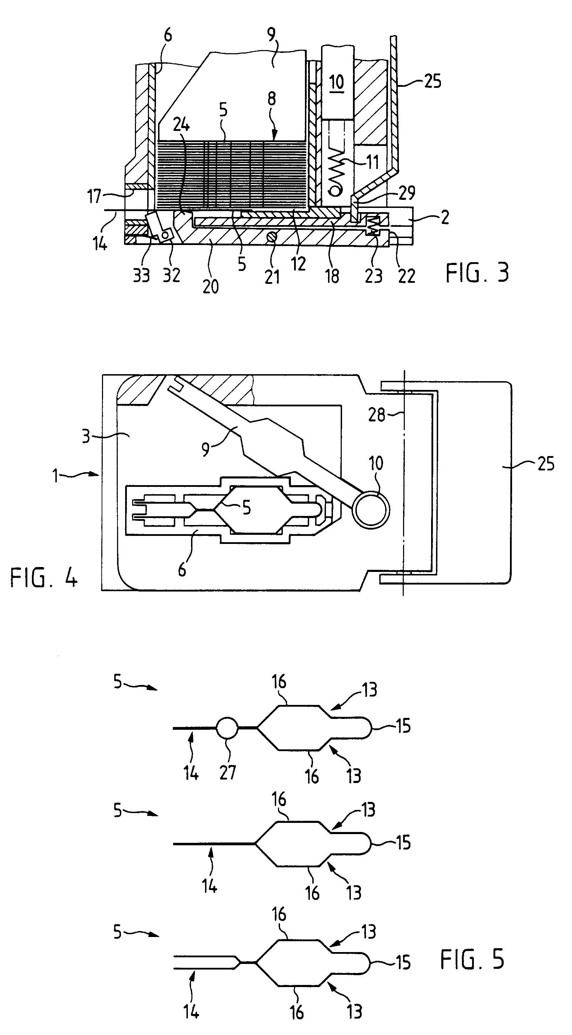

Hierzu weist das in Fig. 1-4 dargestellte Gerät ein quaderförmiges Ausgabegehäuse 1 auf, das auf der Unterseite durch einen Gehäuseboden 2 abgeschlossen ist. Das Ausgabegehäuse 1 weist eine nach oben offene Oeffnung 3 auf, die bodenseitig in einen verhältnismässig engen Spalt 4 übergeht, in welchem eine Packung 8 von Ligaturendrähten 5, siehe Fig. 5, eingelegt werden kann. Die Ligaturendrähte 5 liegen hierbei in einer Kolonne aufeinander. In dem Gerät nach Fig. 1-4 wird hierzu eine Ligaturenhülse 6 verwendet, welche die aufeinander liegenden einzelnen Ligaturendrähte als Packung 8 zusammenhält. Auf die Oberseite der Packung 8 drückt ein Stössel 9, der mit einem im Ausgabegehäuse 1 gelagerten Führungsrohr 10 verbunden ist. Im Innern des Führungsrohrs 10 ist eine Zugfeder 11 untergebracht, die in der Nähe des Gehäusebodens 2 am Ausgabegehäuse 1 befestigt ist und den Stössel 9 auf die Packung 8 drückt. Der Stössel 9 weist einen Querschnitt ähnlich demjenigen des Ligaturendrahtes 5 auf, damit er in die Ligaturenhülse 6 eingeführt werden kann.

Es ist auch möglich, die Ligaturendrähte 5 auch ohne Ligaturenhülse 6 als Packung 8 zusammenzufügen, beispielsweise dadurch, dass die einzelnen Ligaturendrähte aneinander geleimt werden. Hierbei müssen die Ligaturendrähte 5 einerseits so fest zusammenhalten, dass sie nicht vor ihrem Einsatz auseinanderfallen und andererseits darf die Verbindung zwischen den einzelnen Ligaturendrähten 5 nicht so gross sein, dass bei der Ausgabe eines einzelnen Ligaturendrahtes eine Verformung der doch recht dünnen Drähte, deren Durchmesser 0,2-0,3 mm beträgt, erfolgt. Werden die Ligaturendrähte 5 dagegen in der Ligaturenhülse 6 eingesetzt, muss eine gegenseitige Verbindung zwischen den Ligaturendrähten nicht vorgesehen werden.

Im Gehäuseboden 2 ist am Ende des Spaltes 4 eine Ausnehmung 12 vorgesehen, deren Tiefe gerade der Drahtstärke eines Ligaturendrahtes 5 entspricht. In der Ausnehmung 12 befindet sich der Ligaturendraht 5 in einer Bereitschaftstellung, aus welcher er in die Uebergabestellung, siehe Fig. 3, geführt wird, in welcher die Endpartien 14 der Ligaturendrähte 5 sich durch einen im Ausgabegehäuse 1 eingesetzten Zentrierring 17 erstrecken. In dieser Uebergabestellung können die Endpartien 14 von einem Twister gefasst und damit der Ligaturendraht 5 unverzüglich zur Fixierung eines Bogens verwendet werden.

Im Gehäuseboden 2 ist ein Schieber 18 gelagert, in welchem eine Mitnehmerklinke 20 schwenkbar gelagert ist. Die Mitnehmerklinke 20 ist um eine Drehachse 21, siehe Fig. 3 schwenkbar gelagert. Die Mitnehmerklinke 20 wird an ihrem hinteren Ende 22 durch eine Druckfeder 23 beaufschlagt, durch welche das vordere Ende der Mitnehmerklinke 20 mit seinem abgebogenen Endteil 24 in die Ausnehmung 12 im Gehäuseboden 2 gedrückt wird. Mit dem Endteil 24 kann der Ligaturdraht 5 aus der Bereitschaftstellung in die Uebergabestellung geschoben werden, wenn ein am Ausgabegehäuse 1 schwenkbar gelagerter Betätigungsarm 25 gedrückt wird. Der Betätigungsarm 25 weist am oberen Ende des Ausgabegehäuses 1 eine Drehachse 28 auf, während sein nach unten ragendes freies Ende 29 in einen Schlitz 30 im Schieber 18 ragt. Wird der Betätigungsarm 25 gedrückt, wird der Schieber in Richtung des Zentrierringes 17 verschoben, wodurch der in der Ausnehmung 12 liegende einzelne Ligaturendraht 5 in die in Fig. 3 dargestellte Uebergabestellung übergeführt wird.

Zur Führung des Ligaturendrahtes 5 ist im Boden im Bereich des Zentrierringes 17 eine schwenkbare Klappe 32 angeordnet, die unter der Wirkung einer Blattfeder 33 steht und um eine horizontale Drehachse 34 schwenkbar ist.

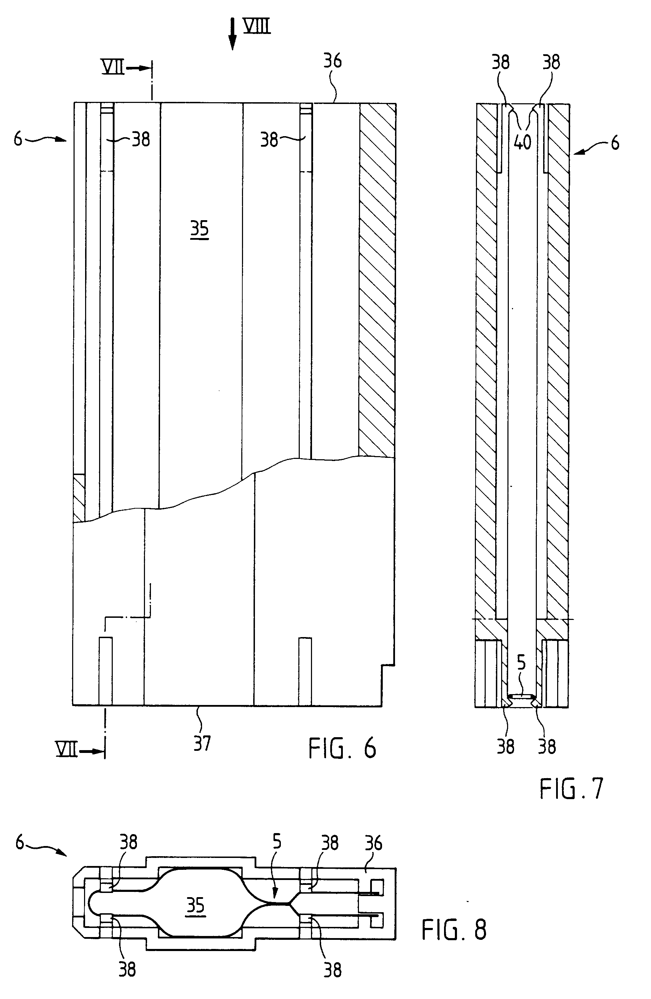

In Fig. 6 und 7 ist die Ligaturenhülse 6 im Detail dargestellt. Die Ligaturenhülse 6 weist einen Durchgang 35 auf, in welchen eine Packung 8 von Ligaturendrähten 5 eingelegt wird. Damit die Ligaturendrähte aus der Ligaturenhülse 6 nicht herausfallen können, sind an der oberen und unteren Stirnseite 36, 37 der Ligaturenhülse 6 Haltearme 38, siehe insbesondere Fig. 7, angeordnet. Die Haltearme 38 weisen ein nockenförmiges Endteil 40 auf und sind zudem federnd ausgebildet, so dass die Ligaturendrähte 5 durch Aufweiten der Haltearme 38 in die Ligaturenhülse 6 eingefüllt und unter der Wirkung des Stössels 9 aus dem Durchgang herausgedrückt werden können. In Fig. 7 ist an der unteren Stirnseite 37 der erste Ligaturendraht 5 dargestellt, während die Packung selbst nicht dargestellt ist.

Aus Fig. 8 ist der Querschnitt der Ligaturenhülse 6 erkennbar. Der Durchgang 35 ist der Form des Ligaturendrahtes 5 angepasst und dementsprechend ist auch der Spalt 4 entsprechend profiliert. Aus Fig. 4 ist erkennbar, dass der Stössel 9 im Bereich der Oeffnung 3 seitlich ausgeschwenkt werden kann, so dass eine leere Ligaturenhülse 6 herausgenommen und durch eine volle Hülse ersetzt werden kann. Aus Fig. 4 ist weiter ersichtlich, dass der Betätigungsarm 25 das Ausgabegehäuse 1 umfasst. Eine Feder 26, siehe Fig. 1 sorgt dafür, dass der Schieber 18 in seine Ausgangslage zurückgeführt wird, damit der nächste Ligaturendraht durch den Stössel 9 in die Ausnehmung 12 im Gehäuseboden 2 gedrückt werden kann.

In Fig. 5 sind drei unterschiedliche Ligaturendrähte 5 dargestellt. Diese weisen zwei Schenkei 13 auf, deren Mittelteile 16 durch einen Steg 15 miteinander verbunden sind. Wesentlich ist, dass die Endpartien 14 der Schenkel 13 mindestens teilweise miteinander so verbunden sind, dass sie nebeneinander liegen und sich nicht überschneiden. Beim obersten Ligaturendraht 5 sind die Endpartien 14 mit Ausnahme einer kleinen Oeffnung 27 vollständig miteinander verbunden. Der mittlere Ligaturendraht 5 weist vollständig miteinander verbundene Endpartien 14 auf, während die Endpartien 14 beim untersten Ligaturendraht 5 nur am Uebergang zum Mittelteil 16 miteinander verbunden sind. Der Mittelteil 16 wird so geformt, dass er an den Brackets leicht eingesetzt werden kann.

Durch das beschriebene Gerät zur Ausgabe einzelner Ligaturendrähte 6 wird eine wesentliche Beschleunigung bei der Beschickung eines Twisters bzw. sonstigen Ligiergeräten (Nadelhalter) mit Ligaturen in der Kieferorthopädie erreicht. Wesentlich trägt hierzu bei, dass die einzelnen Ligaturendrähte 5 in Packungen 8 zur Verfügung stehen und durch das beschriebene Gerät einzeln ausgegeben werden können.

## Patentansprüche

1. Packung von mehreren gleich ausgebildeten Ligaturendrähten (5) für die Kieferorthopädie, welche jeweils eine Drahtschlaufe und zwei auf gleichem Niveau nebeneinanderliegend angeordnete Schenkel (13) umfassen**, dadurch gekennzeichnet, dass** die Ligaturendrähte (5) deckungsgleich aufeinandergestapelt und durch geeignete Mittel in dieser gegenseitigen Lage festgehalten sind.

2. Packung nach Anspruch 1, **dadurch gekennzeichnet, dass** Endpartien (14) der Schenkel (13) mindestens auf einem Teil ihrer Länge ohne sich zu überschneiden fest verbunden sind, z. B. durch Schweissen, Löten oder Leimen.

3. Packung nach Anspruch 1 oder 2, **dadurch gekennzeichnet, dass** die Ligaturendrähte (5) in einen Ligaturenhülse (6) einzeln aufeinander gestapelt sind.

4. Packung nach Anspruch 3, **dadurch gekennzeichnet, dass** die Ligaturenhülse (6) an ihren Stirnseiten (36, 37) federnd ausgebildete Haltemittel, beispielsweise mit Haltenocken (40) versehene Haltearme (38) aufweist, welche ein Herausfallen der Ligaturendrähte (5) verhindern.

5. Packung nach Anspruch 1 oder 2, **dadurch gekennzeichnet, dass** die Mittel Verbindungsstellen zwischen unmittelbar aufeinanderliegenden Ligaturendrähten (5) umfassen, an denen dieselben z. B. durch Leimen verbunden sind.

6. Gerät zur Aufnahme und Einzelausgabe von Ligaturendrähten (5), **dadurch gekennzeichnet, dass** es ein Ausgabegehäuse (1) umfasst, welches zur Aufnahme einer Packung (8) von deckungsgleich übereinanderliegenden Ligaturendrähten (5) geeignet ist, mit einem Gehäuseboden (2), welcher quer zur Packung (8) von Ligaturendrähten (5) verschiebbar ist, sodass er den jeweils untersten Ligaturendraht (5) mitzunehmen und in eine Bereitschaftsstellung zu schieben geeignet ist.

7. Gerät nach Anspruch 6, dadurch gekennzeichnet, dass im Gehäuseboden (2) des Gerätes eine Ausnehmung (12) ausgespart ist, deren Tiefe der Drahtstärke des Ligaturendrahtes (5) entspricht und in welcher jeweils der unterste Ligaturendraht in seiner Bereitschaftstellung liegt.

8. Gerät nach Anspruch 7, dadurch gekennzeichnet, dass im Boden des Gerätes ein Schieber 18 verschiebbar geführt ist, in welchem eine Mitnehmerklinke (20) schwenkbar gelagert ist, von welcher das Endteil (24) abgebogen ist und als Mitnehmer für den Ligaturendraht (5) in die Ausnehmung (12) und in den Mittelteil (16) des in der Bereitschaftstellung sich befindlichen Ligaturendrahtes (5) ragt.

9. Gerät nach Anspruch 6, dadurch gekennzeichnet, dass an dem Ausgabegehäuse (1) ein Betätigungsarm (25) gelagert ist, von welchem das freie Ende (29) in den hinteren Teil des Schiebers (18) zum Verschieben des untersten Ligaturendrahtes in die Uebergabestellung ragt.

10. Gerät nach Anspruch 6, dadurch gekennzeichnet, dass die mit oder ohne Ligaturenhülse (6) in das Ausgabegehäuse (1) eingeschobene Packung (8) mit einem unter Federkraft (11) stehenden Stössel (9) belastet ist, welcher die Packung gegen den Gehäuseboden (2) des Ausgabegehäuses (1) drückt.

11. Gerät nach Anspruch 6, dadurch gekennzeichnet, dass der Ligaturendraht (5) mit den Endpartien (14) seiner Schenkel (13) in einer Führungsklappe (32) geführt ist, die vor dem Schieber (18) liegt.

12. Gerät nach Anspruch 11, dadurch gekennzeichnet, dass die Führungsklappe (32) unter Federbelastung (33) steht und schwenkbar gelagert ist.

13. Gerät nach Anspruch 6, dadurch gekennzeichnet, dass in dem Ausgabegehäuse (1) an der Uebergabestelle eine Zentrierhülse (17) zur Führung eines den Ligaturendraht (5) zu fassen bestimmten Werkzeuges, beispielsweise eines Twisters, eingesetzt ist.

## Claims

1. Package of several similarly formed ligature wires (5) for use in dental orthopaedics, which wires each comprise a wire loop and two legs (13) that are arranged at the same level lying side by side, characterised in that the ligature wires (5) are stacked one on top of the other in a congruent manner and are held fast in this mutual position by suitable means.

2. Package according to claim 1, characterised in that end sections (14) of the legs (13) are connected in a fixed manner, for example by welding, soldering or gluing, at least along one portion of their length, without overlapping.

3. Package according to claim 1 or 2, characterised in that the ligature wires (5) are individually stacked one on top of the other in a ligature sleeve (6).

4. Package according to claim 3, characterised in that the ligature sleeve (6) has on its faces (36, 37) resiliently formed holding means, for example holding arms (38) provided with holding cams (40) which prevent the ligature wires (5) from falling out.

5. Package according to claim 1 or 2, characterised in that the means include points of connection between ligature wires (5) lying directly one on top of the other, at which points the latter are connected, for example by gluing.

6. Device for accommodating and singly dispensing ligature wires (5), characterised in that it comprises a dispensing housing (1), which is able to accommodate a package (8) of ligature wires (5) lying one on top of the other in a congruent manner, having a housing base (2) which can be displaced transversely to the package (8) of ligature wires (5) so that it is able to entrain the ligature wire (5) which is lowermost in each case and push it into a ready position.

7. Device according to claim 6, characterised in that hollowed out in the base of the housing (2) of the device there is a recess (12), the depth of which corresponds to the wire thickness of the ligature wire (5) and in which there lies, in each case, the lowermost ligature wire in its ready position.

8. Device according to claim 7, characterised in that a slide 18 is guided in a displaceable manner in the base of the device, in which slide there is swivel-mounted a pawl (20), the end portion (24) of which is off-set and projects, as a carrier for the ligature wire (5), into the recess (12) and into the central portion (16) of the ligature wire (5) which is in the ready position.

9. Device according to claim 6, characterised in that an actuating arm (25) is mounted on the dispensing housing (1), the free end (29) of which arm projects into the rear portion of the slide (18) for the purpose of displacing the lowermost ligature wire into the delivery position.

10. Device according to claim 6, characterised in that the package (8) inserted into the dispensing housing (1) with or without ligature sleeve (6) is loaded with a plunger (9) which is under spring force (11) and presses the package against the housing base (2) of the dispensing housing (1).

11. Device according to claim 6, characterised in that the ligature wire (5) is guided with the end sections (14) of its legs (13) in a guide flap (32) which lies in front of the slide (18).

12. Device according to claim 11, characterised in that the guide flap (32) is spring-loaded (33) and is swivel-mounted.

13. Device according to claim 6, characterised in that a centering sleeve (17) is inserted in the dispensing housing (1) at the point of delivery, for the guidance of a tool, for example a twister, intended for gripping the ligature wire (5).

## Revendications

1. Paquet de plusieurs fils métalliques de ligature (5) configurés de la même manière pour l'orthopédie dento-faciale, qui comprennent chacun un crochet en fil métallique et deux branches (13) disposées au même niveau et à coté l'un de l'autre, caractérisé en ce que les fils métalliques de ligature (5) sont empilés en coïncidence et sont immobilisés par des moyens adéquats dans cette position réciproque.

2. Paquet suivant la revendication 1, caractérisé en ce que les parties d'extrémité (14) des branches (13) sont reliées rigidement, au moins sur une partie de leur longueur, sans se chevaucher, par exemple, par soudage, brasage ou collage.

3. Paquet suivant la revendication 1 ou 2, caractérisé en ce que les fils métalliques de ligature (5) sont empilés dans un étui à ligatures (6).

4. Paquet suivant la revendication 3, caractérisé en ce que l'étui à ligatures (6) présente sur ses faces d'about (36, 37) des moyens de support élastiques, par exemple, des bras de support (38) munis de cames de support (40), qui empêchent les fils métalliques de ligature (5) de tomber.

5. Paquet suivant la revendication 1 ou 2, caractérisé en ce que les moyens comprennent des points de liaison entre des fils métalliques de ligature (5) directement superposés, par lesquels ces fils sont reliés par exemple par collage.

6. Appareil permettant de loger et distribuer des fils métalliques de ligature (5) un par un, caractérisé en ce qu'il comprend un boîtier de distribution (1) propre à recevoir un paquet (8) de fils métalliques de ligature (5) empilés en coïncidence, avec un fond de boîtier (2) qui peut se déplacer transversalement au paquet (8) de fils métalliques de ligature (5), de sorte qu'il est à même d'entraîner le fil métallique de ligature (5) inférieur respectif et le faire glisser vers une position d'attente.

7. Appareil suivant la revendication 6, caractérisé en ce qu'un évidement (12), dont la profondeur correspond à l'épaisseur du fil métallique de ligature (5) et dans lequel le fil métallique de ligature inférieur se trouve dans sa position d'attente, est ménagé dans le fond (2) du boîtier de l'appareil.

8. Appareil suivant la revendication 7, caractérisé en ce que dans le fond de l'appareil est guidé à qlissement un coulisseau 18, dans lequel est monté à pivotement un cliquet entraîneur (20) dont l'extrémité (24) est coudée et pénètre, en tant qu'entraîneur pour le fil métallique de ligature (5), dans l'évidement (12) et dans la partie médiane (16) du fil métallique de ligature (5) placé en position d'attente.

9. Appareil suivant la revendication 6, caractérisé en ce qu'un bras d'actionnement (25), dont l'extrémité libre (29) s'étend dans la partie postérieure du coulisseau (18) pour déplacer le fil métallique de ligature inférieur en position de transfert, est monté sur le boitier de distribution (1).

10. Appareil suivant la revendication 6, caractérisé en ce que le paquet (8) inséré avec ou sans étui à ligatures (6) dans le boîtier de distribution (1) est sollicité par un poussoir à ressort (11) qui pousse le paquet contre le fond (2) du boîtier de distribution (1).

11. Appareil suivant la revendication 6, caractérisé en ce que le fil métallique de ligature (5) est guidé par les parties d'extrémité (14) de ses branches (13) dans un clapet de guidage (32) qui se trouve devant le coulisseau (18).

12. Appareil suivant la revendication 11, caractérisé en ce que le clapet de guidage (32) est soumis à la sollicitation d'un ressort (33) et est monté à pivotement.

13. Appareil suivant la revendication 6, caractérisé en ce qu'une bague de centrage (17) permettant de guider un outil destiné à saisir le fil métallique de ligature (5), par exemple un twister, est utilisé dans le boitier de distribution (1) au point de transfert.
